Europäisches Patentamt

European Patent Office (11) Numéro de publication: **0 137 563**

Office européen des brevets **B1**

(12) **FASCICULE DE BREVET EUROPEEN**

(45) Date de publication du fascicule du brevet: **04.01.89**   (51) Int. Cl.⁴: **H 04 L 1/02**

(21) Numéro de dépôt: **84201411.0**

(22) Date de dépôt: **04.10.84**

(54) **Procédé de commutation avec remise en phase automatique des données sur +/- 3,5 bits et dispositif de commutation réalisé suivant ce procédé.**

(30) Priorité: **07.10.83 FR 8315989**

(43) Date de publication de la demande:
**17.04.85 Bulletin 85/16**

(45) Mention de la délivrance du brevet:
**04.01.89 Bulletin 89/01**

(84) Etats contractants désignés:
**DE FR GB IT SE**

(56) Documents cités:
**EP-A-0 060 751**
**DE-A-3 206 749**
**FR-A-2 445 669**
**FR-A-2 462 065**
**US-A-4 015 205**

(73) Titulaire: **TELECOMMUNICATIONS RADIOELECTRIQUES ET TELEPHONIQUES T.R.T.**
**88, rue Brillat Savarin**
**F-75013 Paris (FR)**

(72) Inventeur: **Cornet, Jean-François René**
**SOCIETE CIVILE S.P.I.D. 209 rue de l'Université**
**F-75007 Paris (FR)**
Inventeur: **Clement, Patrick**
**SOCIETE CIVILE S.P.I.D. 209 rue de l'Université**
**F-75007 Paris (FR)**

(74) Mandataire: **Chaffraix, Jean et al**
**Société Civile S.P.I.D. 209, rue de l'Université**
**F-75007 Paris (FR)**

Courier Press, Leamington Spa, England.

## Description

La présente invention concerne un procédé de correction automatique de la position relative des signaux de données transmis sur deux canaux véhiculant la même information numérique mais avec un écart de phase pouvant atteindre quelques bits, ladite correction étant suivie de la commutation du canal de moindre qualité sur le canal de meilleure qualité, chacun desdits canaux étant relié à l'entrée d'écriture d'une mémoire tampon dont la sortie de lecture est reliée à une entrée du commutateur sur les signaux de données, chacune desdites mémoires tampon comportant un ensemble de registres effectuant une conversion série-parallèle sur $N_i$ bits au rythe d'écriture égal au quotient de la fréquence d'horloge $H_i$ du canal correspondant par $N_i$, les rythmes d'éciture entre chacun desdits canaux étant remis en phase au moyen d'une boucle à verrouillage de phase, le rythme de lecture étant ainsi asservi au rythme d'écriture et déphasé par rapport à ce dernier afin d'assurer entre l'écriture et la lecture un intervalle de temps suffisant pour effectuer la commutation sur le canal de meilleure qualité, les informations d'écriture de chaque mémoire tampon étant transmises à un comparateur logique qui commande, selon la demande de commutation en cours, lesdits rythmes d'écriture et la position du commutateur sur les signaux de données.

L'invention concerne également le dispositif de commutation réalisé suivant ce procédé.

Un tel dispositif est susceptible d'être utilisé chaque fois qu'une même information numérique est acheminée suivant deux canaux différents afin d'assurer une plus grande sécurité de la transmission.

A l'émission, un coupleur ou un séparateur aiguille l'information vers les canaux. A la réception, des critères d'appréciation extérieurs sont transmis à une logique qui détermine le choix du canal de meilleure qualité; le problème est alors d'effectuer une commutation d'un canal sur l'autre sans perte d'information.

Ce dispositif s'applique en particulier en transmission par faisceaux hertziens dans les systèmes de réception en diversité basés sur l'hypothèse de la faible probabilité qu'ont deux canaux de transmission de devenir simultanément défectueux. L'unique canal de secours commun aux n canaux normaux (n étant habituellement égal à 7) véhicule l'information du canal qui devient mauvais à un instant donné. Lorsque ce canal redevient bon, le canal de secours est libéré pour qu'il puisse à nouveau se substituer temporairement à un autre canal défectueux.

Les organes de traitement de l'information binaire situés en aval du dispositif de commutation (par exemple les autocommutateurs s'il s'agit d'une transmission téléphonique) se synchronisent sur le signal lui-même. Mais les temps de propagation d'une même information sur deux canaux de transmission différents ne sont pas rigoureusement identiques; ils présentent un écart dépendant des conditions de traversée de l'éther et d'autant plus grand que le débit de l'information (de 2 Mbits/s à 140 Mbits/s) est plus rapide. Cet écart peut être suffisant pour introduire à la réception une transition supplémentaire dans le signal d'horloge et un décalage fluctuant de plusieurs bits entre les informations transmises sur les deux canaux. A l'instant de la commutation d'un canal sur l'autre, le message est tronqué en une partie transmise sur le premier canal et en une autre partie transmise sur le second canal. En l'absence de précaution il s'établit une discontinuité dans le message puisqu'on a supprimé ou rajouté des bits. Il en résulte que les matériels situés en aval ont perdu leur synchronisation. Ce défaut entraîne la perte d'un nombre considérable d'informations binaires.

Afin de pallier ces inconvénients, divers dispositifs de commutation de canaux ont été proposés, par exemple celui décrit dans la demande de brevet européen No. 0 060 751 qui comporte entre autres la mémoire tampon associée à chacun des canaux mentionnés dans le préambule et qui possède deux branches se fondant en une seule au niveau de n commutateurs parallèles.

Dans ce dispositif connu, la commutation des données à lieu au niveau des données fictives, c'est-à-dire sur les données dont la durée est n fois plus longue que celle des données réelles. Cette commutation s'effectue "aproximativement au milieu de la durée d'intégration de la boucle à verrouillage de phase" ce qui entraîne un "compromis entre rapidité et qualité" de synchronisation et rend le dispoositif spécifique du débit numérique.

Par ailleurs, en ce qui concerne les ordres de déphasage, on attend de compter une divergence d'identité entre les deux trains de données fictives pour provoquer un déphasage d'un coupe d'horloge sur le nouveau canal.

De plus le comptage des divergences s'opère au moyen d'une fenêtre de mesure obtenue par monostable ce qui entraîne une perte de temps égale au délai nécessaire pour déphaser de $2\pi/n$.

La présente invention propose une autre méthode qui permet d'effectuer la commutation de canaux dans un délai plus court sans perte ou sans apport d'informations sur $\pm 3,5$ bits et qui s'opère au niveau des données réelles c'est-à-dire en sortie de la mémoire tampon ce qui permet de réaliser une structure plus simple de cette mémoire.

A cet effet, le procédé conforme à l'invention est remarquable en ce que le processus de recherche de mise en synchronisme préalable (avant commutation) est effectué en forçant systématiquement ledit rythme d'écriture à un rythme accru égal au quotient de ladite fréquence d'horloge $H_i$ par $N_i-1$ dans la mémoire tampon du canal de meilleure qualité, tandis qu'il est effectué au rythme normal $H_i/N_i$ dans la mémoire tampon du canal de moindre qualité à secourir, ledit processus étant poursuivi jusqu'à la coïncidence des données entre les deux canaux qui se produira nécessairement au maximum après

$N_i \times (N_i - 1)$ bits en l'absence d'erreur de transmission, la commutation du rythme du canal de moindre qualité vers le canal de meilleure qualité correspondant à la commutation du rythme d'écriture vers la boucle à verrouillage de phase et la commutation des signaux de données au niveau des données réelles en sortie de lecture desdites mémoires tampon se produisant simultanément.

La description suivante en regard des dessins annexés, le tout donné à titre d'exemple fera bien comprendre comment l'invention peut être réalisée.

La figure 1 est un schéma sous forme de blocs du dispositif de commutation selon un mode de réalisation de la présente invention.

La figure 2 est un diagramme de temps représentant plusieurs signaux qui apparaissent dans le circuit de commutation conforme à l'invention.

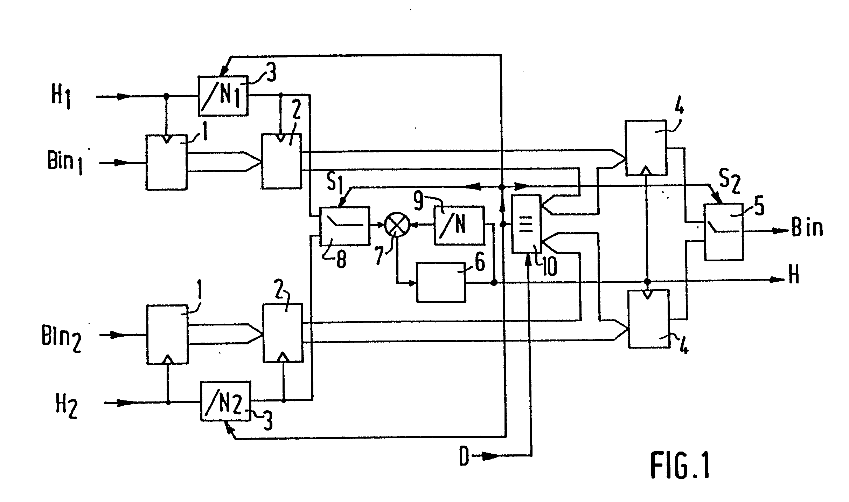

Sur le schéma synoptique de la figure 1, deux canaux véhiculent à un moment donné la même information numérique avec toutefois un écart de phase pouvant atteindre quelques bits. Chaque canal est porteur d'un train binaire $Bin_i$ avec $i=1$ pour l'un des canaux et $i=2$ pour l'autre. Des critères extérieurs au dispositif conduisent à déterminer le canal de meilleure qualité.

Le dispositif permettant d'effectuer la commutation d'un canal sur l'autre sans perte d'information est constitué par:

1. un dispositif mémoire tampon sur chacun des deux canaux. Ce dispositif comporte les registres 1 et 2 qui effectuent une conversion série parallèle sur $N_i$ bits. A cet effet, les registres 1 et 2 reçoivent respectivement le signal d'horloge $H_i$ de l'information binaire $Bin_i$ et à travers le diviseur 3, le même signal d'horloge divisé par $N_i$. Les $N_i$ bits en parallèle au rythme d'écriture $H_i/N_i$ sont tranmis à l'entrée d'un registre 4 dans lequel s'effectue une transformation parallèle série pour la lecture de l'information binaire $Bin$ à travers l'aiguillage 5, l'ensemble des registres 1, 2 et 4 formant ladite mémoire tampon.

2. une boucle à verrouillage de phase commune aux deux canaux et constituée par un oscillateur contrôlé en tension 6 au rythme H, dont la sortie est reliée aux registres 4 et l'entrée à un mélangeur 7 qui reçoit par ailleurs à travers l'aiguillage 8 le signal d'horloge $H_i$ divisé par $N_i$ et le signal H divisé par N à travers le diviseur 9. On obtient ainsi selon l'invention l'asservissement en opposition de phase de l'oscillateur sur l'un ou l'autre des rythmes d'écriture et la lecture de la mémoire tampon au rythme H/N.

3. un comparateur logique 10 qui commande:
les rythmes d'écriture $H_i/N_i$ pouvant être éventuellement forcés à $H_i/N_i - 1$,
l'aiguillage 8 des rythmes à l'entrée de la boucle à verrouillage de phase par le signal $S_1$,
l'aiguillage 5 sur les données par le signal $S_2$.

Ces ordres sont exécutés selon la demande de commutation en cours D et les informations d'écriture de chaque mémoire tampon transmises au comparateur 10.

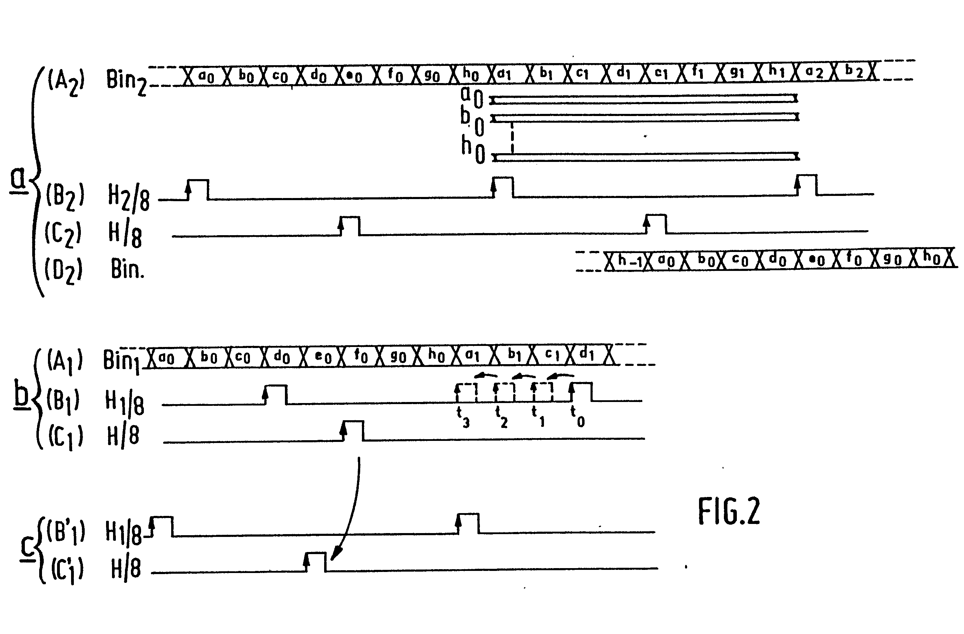

Le fonctionnement du circuit de commutation selon le mode de réalisation de la présente invention sera décrit en liaison avec les diagrammes de temps de la figure 2.

Les figures 2a et 2b sont respectivement les diagrammes de temps relatifs aux canaux 2 et 1 dans leur état initial au moment de la demande de commutation.

La figure 2c est le diagramme de temps relatif au canal 1 après commutation.

Le canal 2 étant supposé au départ comme étant celui dont la qualité se dégrade, on se propose d'effectuer la commutation sur le canal 1 dont la qualité est la meilleure.

Sur la figure 2a, la ligne $A_2$ montre les données du canal 2,...$a_{-1}$, $b_{-1}$...$h_{-1}$, $a_0$, $b_0$, ...$h_0$, $a_1$, $b_1$,...$h_1$,... convertis dans la mémoire tampon en 8 trains parallèles ($N_2=8$) au rythme d'écriture $H_2/8$ représenté sur la ligne $B_2$. La ligne $C_2$ représente le rythme de lecture H/8 ($N=8$) de l'oscillateur contrôlé en tension synchronisé en opposition de phase avec le rythme d'écriture $H_2/8$ du canal 2. La ligne $D_2$ montre les données du canal 2 relues au rythme $H/8=H_2/8$.

On suppose que les données du canal 1 représentées sur la ligne $A_1$ de la figure 2b ont à l'instant d'écriture $t_0$ une avance de phase de 1 bit sur celles du canal 2 et que le rythme d'écriture $H_1/8$ ($N_1=8$) représenté sur la ligne $B_1$ de la même figure a un retard de phase de 2 bits sur le rythme d'écriture $H_2/8$.

Le rythme de lecture de l'oscillateur contrôlé en tension est représenté sur la ligne $C_1$ toujours en opposition de phase par rapport au rythme $H_2/8$.

Lors de la demande de commutation du canal 2 vers le canal 1, la fonction mémoire tampon du canal 1 est forcée à l'instant d'écriture $t_1$ au rythme d'écriture $H_1/7$ suivant la représentation en pointillés de la figure, le rythme de lecture restant inchangé.

L'instant d'écriture se déplace donc d'un bit à chaque écriture ($t_2$, $t_3$...) en transférant les 8 derniers bits reçus. Dans ce cas, il y a nécessairement une position parmi les 8 possibles qui entraîne une coïncidence des 8 bits entre les sorties des deux mémoires tampon.

Cette coïncidence qui a lieu si l'instant d'écriture dans la mémoire 1 apparaît sur le même bit que celui pour lequel l'instant d'écriture apparaît dans la mémoire 2 se produit apres un décalage de 3 bits dans le cas représenté sur la figure 2.

Le rythme d'écriture sur le canal 1 est maintenu à $H_1/7$ pendant toute la phase de recherche durant laquelle l'évolution des données sur le canal 1 est la suivante:

| état initial | après décalage de 1 bit | après décalage de 2 bits | après décalage de 3 bits |
|---|---|---|---|
| $d_{-1}$ | $c_{-1}$ | $b_{-1}$ | $a_{-1}$ |
| $e_{-1}$ | $d_{-1}$ | $c_{-1}$ | $b_{-1}$ |
| $f_{-1}$ | $e_{-1}$ | $d_{-1}$ | $c_{-1}$ |
| $g_{-1}$ | $f_{-1}$ | $e_{-1}$ | $d_{-1}$ |
| $h_{-1}$ | $g_{-1}$ | $f_{-1}$ | $e_{-1}$ |
| $a_0$ | $h_{-1}$ | $g_{-1}$ | $f_{-1}$ |
| $b_0$ | $a_0$ | $h_{-1}$ | $g_{-1}$ |
| $c_0$ | $b_0$ | $a_0$ | $h_{-1}$ |

Il faut par ailleurs que le retard ou l'avance de cet instant d'écriture par rapport à l'autre n'excède pas la moitié de la taille de la mémoire tampon.

Dés que la coïncidence sur 8 bits est acquise, le signal d'horloge d'écriture $H_1/8$ occupe la position représentée sur la ligne $B'_1$ de la figure 2c. Les opérations suivantes sont alors effectuées:

commutation des données dans l'aiguillage 5,

verrouillage du rythme d'écriture à $H_1/8$ par l'aiguillage 8,

commutation vers l'oscillateur contrôle en tension du rythme $H_1/8$ par l'aiguillage 8.

Après commutation, l'oscillateur contrôlé en tension revient lentement à une position stable d'instant de lecture en opposition de phase avec l'instant d'écriture ce qui entraîne de la gigue. Cette position est représentée sur la ligne $C'_1$ de la figure 2c.

Remarques:

1. La commutation des données a donc lieu dès la détection d'une coïncidence sur 8 bits entre les deux trajets. Sans nuire à la généralité de l'invention, il peut être ajouté un dispositif de comptage n'autorisant la commutation des données qu'après un certain nombre de coïncidences sur 8 bits.

2. La gigue créée lors de la commutation des rythmes peut être rendue aussi faible que voulue. En effet, la gigue n'apparaît qu'après commutation des données, il suffit donc de calculer un filtre de boucle étroit dans l'oscillateur verrouillé en phase, qui amènera l'horloge de lecture $H/8$ à sa position de repos après un temps suffisamment long.

3. La plage d'égalisation théorique est $\pm 4$ bits, mais du fait du temps de propagation des signaux à travers les circuits logiques, cette plage est réduite à $\pm 3,5$ bits.

**Revendications**

1. Procédé de correction automatique de la position relative des signaux de données transmis sur deux canaux ($BIN_1$, $BIN_2$) véhiculant la même information numérique mais avec un écart de phase pouvant atteindre quelques bits, ladite correction étant suivie de la commutation du canal de moindre qualité sur le canal de meilleure qualité, chacun desdits canaux étant relié à l'entrée d'écriture d'une mémoire tampon (1, 2, 4) dont la sortie de lecture est reliée à une entrée du commutateur (5) sur les signaux de données, chacune desdites mémoires tampon comportant un ensemble de registres (1, 2) effectuant une conversion série-parallèle sur $N_i$ bits au rythme d'écriture égal au quotient de la fréquence d'horloge $H_i$ du canal correspondant par $N_i$, les rythmes d'écriture entre chacun desdits canaux étant remis en phase au moyen d'une boucle à verrouillage de phase (6, 7, 9), le rythme de lecture étant ainsi asservi au rythme d'écriture et déphasé par rapport à ce dernier afin d'assurer entre l'écriture et la lecture un intervalle de temps suffisant pour effectuer la commutation sur le canal de meilleure qualité, les informations d'écriture de chaque mémoire tampon étant transmises à un comparateur logique (10) qui commande, selon la demande de commutation en cours, lesdits rythmes d'écriture et la position du commutateur sur les signaux de données, caractérisé en ce que le processus de recherche de mise en synchronisme préalable (avant commutation) est effectué en forçant systématiquement ledit rythme d'écriture à un rythme accru égal au quotient de ladite fréquence d'horloge $H_i$ par $N_i - 1$ dans la mémoire tampon du canal de meilleure qualité, tandis qu'il est effectué au rythme normal $H_i/N_i$ dans la mémoire tampon du canal de moindre qualité à secourir, ledit processus étant poursuivi jusqu'à la coïncidence des données entre les deux canaux qui se produira nécessairement au maximum après $N_i \times (N_i - 1)$ bits en l'absence d'erreur de transmission, la commutation du rythme du canal de moindre qualité vers le canal de meilleure qualité correspondant à la commutation du rythme d'écriture vers la boucle à verrouillage de phase (6, 7, 9) et la commutation des signaux de données au niveau des données réelles en sortie de lecture desdites mémoires tampon se produisant simultanément.

2. Dispositif de commutation réalisé par le procédé selon la revendication 1, avec correction automatique de la position relative des signaux de données transmis sur deux canaux ($BIN_1$, $BIN_2$) véhiculant la même information numérique mais avec un écart de phase pouvant atteindre quelques bits, et ensuite commutation du canal de moindre qualité sur le canal de meilleure qualité, ledit dispositif comportant une mémoire tampon (1, 2, 4) dont l'entrée d'écriture est reliée à chacun desdits canaux et dont la sortie de lecture est reliée à une entrée du commutateur (5) sur les signaux de données, chacune desdites mémoires tampon comportant un ensemble de registres (1, 2) effectuant une conversion série-parallèle sur $N_i$ bits aux rythme d'écriture égal au quotient de la fréquence d'horloge $H_i$ du canal correspondant par $N_i$, une boucle à verrouillage de phase (6, 7, 9) assurant la remise en phase des rythmes d'écriture entre chacun desdits canaux, le rythme de lecture étant ainsi asservi au rythme d'écriture et déphasé par rapport à ce dernier afin d'assurer entre l'écriture et la lecture un intervalle de temps suffisant pour effectuer la commutation sur le canal de meilleure qualité, un comparateur logique (10) qui reçoit les informations d'écriture de chaque mémoire tampon et qui commande, selon la demande de commutation en cours, lesdits rythmes d'écriture et la position du commutateur sur les signaux de données, caractérisé en ce que ledit comparateur logique (10) commande les rythmes d'écriture à un rythme accru égal au quotient de ladite fréquence d'horloge $H_i$ par $N_i-1$ dans la mémoire tampon du canal de meilleure qualité, et à un rythme normal $H_i/N_i$ dans la mémoire tampon du canal de moindre qualité à secourir jusqu'à ce que la coïncidence des données entre les deux canaux se produise c'est-à-dire au maximum après $N_i \times (N_i-1)$ bits en l'absence d'erreur de transmission, la commutation du rythme du canal de moindre qualité vers le canal de meilleure qualité correspondant à la commutation du rythme d'écriture vers la boucle à verrouillage de phase (6, 7, 9) et la commutation des signaux de données au niveau des données réelles en sortie de lecture desdites mémoires tampon se produisant simultanément.

**Patentansprüche**

1. Verfahren zum automatischen Korrigieren der relativen Lage über zwei Kanäle (BIN$_1$, BIN$_2$) übertragener Datensignale, wobei die Kanäle dieselbe digitale Information transportieren, aber mit einer Phasenverzögerung, die einige Bits betragen kann, wobei nach der Korrektur eine Umschaltung von dem Kanal niedriger Qualität auf den Kanal besserer Qualität erfolgt, wobei jeder dieser Kanäle mit dem Schreibeingang eines Pufferspeichers (1, 2, 4) verbunden ist, dessen Leseausgang mit einem Eingang des Umschalters (5) für die Datensignale verbunden ist, wobei jeder dieser Pufferspeicher einen Registersatz (1, 2) aufweist, der eine Serien-Parallel-Umwandlung über $N_i$ Bits herbeiführt mit einem Schreibtakt gleich dem Quotienten aus der Taktfrequenz $H_i$ des entsprechenden Kanals und dem Wert $N_i$, wobei die Schreibtakte der Kanäle mittels einer Phasenverriegelungsschleife (6, 7, 9) miteinander in Phase gebracht werden, wobei der Lesetakt mit dem Schreibtakt gesteuert und gegenüber diesem phasenverschoben wird, damit zwischen dem Schreiben und Lesen ein Zeitintervall erzeugt wird, das ausreicht zum Durchführen der Umschaltung auf den Kanal höherer Qualität, wobei die Schreibinformationen jedes Pufferspeichers einer logischen Vergleichsschaltung (10) zugeführt werden, die, in Antwort auf einen Umschaltantrag, die Schreibtakte und die Stellung des Umschalters für die Datensignale steuert, dadurch gekennzeichnet, dass das Suchverfahren vorhergehender Synchronisierung (vor der Umschaltung) dadurch durchgeführt wird, dass der Schreibtakt systematisch auf einen erhöhten Takt gezwungen wird, der dem Quotienten aus der Taktfrequenz $H_i$ und dem Wert $N_i-1$ in dem Pufferspeicher des Kanals höherer Qualität entspricht, während dieses Verfahren bei normalem Takt $H_i/N_i$ in dem Pufferspeicher des zu unterstützenden Kanals niedrigerer Qualität durchgeführt wird, wobei dieses Verfahren fortgesetzt wird bis die Daten in den zwei Kanälen zusammenfallen, was unbedingt nach maximal $N_i \cdot (N_i-1)$ Bits ohne Übertragungsfehler erfolgt, wobei die Taktumschaltung vom Kanal niedrigerer Qualität auf den Kanal höherer Qualität übereinstimmt mit den gleichzeitig stattfindenden Schreibtaktumschaltung zur Phasenverriegelungsschleife (6, 7, 9) und Datensignalumschaltung auf der Ebene der reellen Daten am Leseausgang der Pufferspeicher.

2. Umschaltanordnung, verwirklicht nach dem Verfahren nach Anspruch 1 mit automatischer Korrektur der relativen Lage über zwei Kanäle (BIN$_1$, BIN$_2$) übertragener Datensignale, wobei die Kanäle dieselbe digitale Information transportieren, aber mit einer Phaseverzögerung, die einige Bits betragen kann, und mit nachfolgender Umschaltung vom Kanal niedrigerer Qualität auf den Kanal höherer Qualität, wobei diese Umschaltanordnung für jedem Kanal einen Pufferspeicher (1, 2, 4) aufweist, dessen Schreibeingang mit dem betreffenden Kanal verbunden ist und dessen Leseausgang mit einem Eingang des Umschalters (5) für die Datensignale verbunden ist, wobei jeder dieser Pufferspeicher einen Registersatz (1, 2) aufweist, der eine Serien-Parallel-Umwandlung über $N_i$ Bits herbeiführt mit einem Schreibtakt gleich dem Quotienten aus der Taktfrequenz $H_i$ des entsprechenden Kanals und dem Wert $N_i$, ferner eine Phasenverriegelungsschleife (6, 7, 9) zur Gewährleitung des Phasengleichlaufs der Schreibtakte der Kanäle, wobei der Lesetakt mit dem Schreibtakt gesteuert und gegenüber diesem phasenverschoben wird, damit zwischen dem Schreiben und Lesen ein Zeitintervall erzeugt wird, das ausreicht zum Durchführen der Umschaltung auf den Kanal höherer Qualität, weiterhin eine logische Vergleichsschaltung (10), welche die Schreibinformationen jedes Pufferspeichers erhält und die, in Antwort auf einen Umschaltantrag, die Schreibtakte und die Stellung des Umschalters für die Datensignale steuert, dadurch gekennzeichnet, dass die logische Vergleichsschaltung (10) die Schreibtakte auf einen erhöhten Takt, der dem Quotienten aus der Taktfrequenz $H_i$ und dem Wert $N_i-1$ in dem Pufferspeicher des Kanals höherer Qualität entspricht, bzw. auf einen normalen Takt $H_i/N_i$ in dem Pufferspeicher des zu unterstützenden Kanals niedrigerer Qualität steuert bis die Daten in den zwei Kanälen zusammenfallen, d.h. nach maximal $N_i \cdot (N_i-1)$ Bits ohne Übertragungsfehler, wobei die Taktumschaltung vom Kanal niedrigerer Qualität auf den Kanal höherer Qualität übereinstimmt mit den gleichzeitig stattfindenden Schreibtaktumschaltung zur Phasenverriegelungsschleife (6, 7, 9) und Datensiganlumschaltung auf der Ebene der reellen Daten am Leseausgang der Pufferspeicher.

**Claims**

1. A method ensuring the automatic correction of the relative positions of data signals transmitted *via* two channels (BIN$_1$, BIN$_2$) through which the same digital information is conveyed but with a phase difference which may amount to a few bits, said correction being followed by a switch from the lesser-quality channel to the higher-quality channel, each of said channels being connected to the write input of a buffer store (1, 2, 4) whose read output is connected to an input of the change-over switch (5) for the data signals, each of the said buffer stores comprising a set of registers (1, 2) performing a series-to-parallel conversion over $N_i$ bits at a write rate equal to the quotient of the clock rate $H_i$ of the corresponding channel divided by $N_i$, the write rates for each of the said channels being restored to the in-phase condition by means of a phase-locked loop (6, 7, 9), the read rate thus being controlled by the write rate and brought out of phase with respect to the latter in order to ensure between the writing and the reading operations a time interval which is sufficiently long for effecting the switching to the channel having a higher quality, the write information streams of each buffer store being transmitted to a logic comparator (10) which controls, according to the current wish from the change-over switch, the said write rates and the position of the change-over switch for the data signals, characterized in that the search operation for restoring the previous synchronism (before change-over) is effected by systematically forcing the said write rate to an increased rate equal to the quotient of the said clock rate $H_i$ divided by $N_i-1$ in the buffer store of the higher-quality channel, while in the buffer store of the lesser-quality channel to be aided, the said operation is continued until the data from the two channels coincide, which in the absence of a transmission error will necessarily occur after a maximum of $N_i \cdot (N_i-1)$ bits, the switching of the rate of the lesser-quality channel to that of the higher-quality channel corresponding to the switching of the write rate to that of the phase-locked loop (6, 7, 9) and the simultaneously occurring switch of the data signals on a level with the real data at the read output of the said buffer stores.

2. A change-over switch means realized in accordance with the method as claimed in Claim 1, with automatic correction of the relative position of the data signals transmitted through two channels ($BIN_1$, $BIN_2$) conveying the same digital information but with a phase difference that can consist of several bits, and also a switching from the lesser-quality channel to the higher-quality channel, the said means comprising a buffer store (1, 2, 4) whose write input is connected to each of the said channels and whose read output is connected to an input of the change-over switch (5) for the data signals, each of the said buffer stores comprising a set of registers (1, 2) effecting a series-to-parallel conversion over $N_i$ bits at the write rate equal to the quotient of the clock rate $H_i$ of the corresponding channel divided by $N_i$, a phase-locked loop (6, 7, 9) ensuring the restoration of the in-phase condition of the write rates for each of the said channels, the read rate thus being used for the write rate and brought out of phase relative to the latter in order to ensure between the reading and the writing a time interval which is sufficiently long for effecting the switch to the higher-quality channel, a logic comparator (10) receiving the write information streams from each buffer store and controlling, according to the wish from the change-over switch on the way, the said write rates and the position of the change-over switch for the data signals, characterised in that the said logic comparator (10) controls the write rates at an increased rate equal to the quotient of the said clock rate $H_i$ divided by $N_i-1$ in the buffer store of the higher-quality channel, and to a normal rate $H_i/N_i$ in the buffer store of the lesser-quality channel to be aided until data coincidence occurs between the two channels, that is to say after a maximum of $N_i*(N_i-1)$ bits in the absence of a transmission error, the switching of the rate of the lesser-quality channel to that of the higher-quality channel corresponding to the switching of the write rate to the rate of the phase-locked loop (6, 7, 9) and the switching of the data signals with respect to the real data at the read output of the said buffer stores occurring simultaneously.

FIG.1

FIG.2